# EUROPEAN PATENT APPLICATION

(11) **EP 4 606 843 A1**
(43) Date of publication of application: **27.08.2025**
(21) Application number: 23879875.5
(22) Date of filing: 19.10.2023
(51) Int. Cl.: C08J 5/04, B32B 5/28, B32B 27/18

(54) **FIBER-REINFORCED RESIN COMPOSITE MATERIAL AND MOLDED BODY USING SAME**

(30) Priority: 19.10.2022 JP 2022167930
(71) Applicant: Mitsubishi Chemical Corporation, Tokyo 100-8251 (JP); Mitsubishi Chemical Advanced Materials Japan Ltd., Tokyo 103-0021 (JP)
(72) Inventor: KITA, Hijiri, Yokkaichi-shi, Mie 510-0051 (JP); SATO, Fumiharu, Yokkaichi-shi, Mie 510-0051 (JP); MATSUI, Jun, Tokyo 100-8251 (JP); TAKATA, Nobuaki, Tokyo 100-8251 (JP)
(74) Representative: Vossius & Partner Patentanwälte Rechtsanwälte mbB
(86) International application number: PCT/JP2023/037886
(87) International publication number: WO 2024/085232

(57) **Abstract**

Provided is a fiber-reinforced resin composite material containing a thermoplastic resin composition (X) and an inorganic fiber material (Y), in which the thermoplastic resin composition (X) contains a thermoplastic resin and a phosphorus-based flame retardant, the phosphorus-based flame retardant contains an intumescent flame retardant, and the inorganic fiber material (Y) has an elongation at maximum load of 5% or less. It is possible to provide a fiber-reinforced resin composite material having both high flame shielding property and strength against shock waves.

## Description

### Technical Field

The present invention relates to a fiber-reinforced resin composite material and a molded body using the same.

### Background Art

In recent years, as part of environmental measures, research and development of electric vehicles and hybrid vehicles have been advanced, and development of high energy density batteries and weight reduction for the purpose of improving cruising distances have been actively advanced. Such a high energy density battery may catch fire due to an unexpected accident, and its housing material is required to have high flame shielding property as a safety measure for passengers, and therefore, a metal material such as iron and a fire-resistant material are often used in combination.

However, the metal material has a drawback of being heavy, and when the refractory material is used in combination, there is a problem of an increase in cost due to processability and an increase in the number of parts. Therefore, resinification having a possibility of achieving both weight reduction and flame shielding property has been attempted. At present, for sustainable society, suppression of carbon dioxide and recyclability are becoming important. Many thermosetting materials have high flame retardancy and are common as composite materials. However, thermoplastic resin materials are advantageous in terms of recyclability.

Further, in China, a safety standard of GB 38031-2020 "Electric Vehicles Traction Battery Safety requirements" has been announced, and it is required to issue a warning five minutes before thermal runaway of the battery, but it is considered that this can also be achieved by a housing material that shields flame for five minutes or more after ignition of the battery.

To solve these problems, for example, PTL 1 proposes a carbon fiber-reinforced polypropylene resin to which a bromine-based flame retardant or an antimony oxide compound is added. However, the additive used here has a problem of biopersistence.

On the other hand, as a technique for imparting flame retardancy to a polypropylene-based resin in consideration of biopersistence, PTL 2 proposes a flame-retardant polyolefin-based composition in which a (poly)phosphate compound is contained in a polyolefin-based resin.

In addition, PTL 3 proposes a flame-retardant resin composition in which a glass long fiber and a phosphate compound are contained in a polypropylene resin.

### Citation List

### Patent Literature

PTL 1: JP 2014-62189 A
PTL 2: JP 2013-119575 A
PTL 3: JP 2011-88970 A

### Summary of Invention

### Technical Problem

There are many insufficient points in a conventional fiber-reinforced resin composite material technology having a possibility of satisfying both weight reduction and flame shielding property of a battery of high energy density. Specifically, there are problems that a stampable sheet as a material for obtaining a fiber-reinforced resin composite material cannot maintain fluidity at the time of stamp molding, and sufficient strength and rigidity of the fiber-reinforced resin composite material cannot be obtained after the stamp molding.

In particular, in a battery having a high energy density, there is a possibility that a shock wave derived from an explosion is generated when the battery runs away, and there is a case where strength exhibiting resistance to such a shock wave is required.

The present invention has been made to solve the above problems, and an object of the present invention is to provide a fiber-reinforced resin composite material having both high flame shielding property and strength against shock waves.

### Solution to Problem

In order to solve the above-described problems, the present inventors have conducted intensive studies, and as a result, they have found that a fiber-reinforced resin composite material containing a thermoplastic resin composition containing a phosphorus-based flame retardant and a specific inorganic fiber material can solve the above-described problems, and the present invention has been completed based on these findings.

That is, the present invention provides the following [1] to [15].
[1] A fiber-reinforced resin composite material containing a thermoplastic resin composition (X) and an inorganic fiber material (Y), in which the thermoplastic resin composition (X) contains a thermoplastic resin and a phosphorus-based flame retardant, the phosphorus-based flame retardant contains an intumescent flame retardant, and the inorganic fiber material (Y) has an elongation at maximum load of 5% or less.
[2] The fiber-reinforced resin composite material according to [1], including at least one layer (A) in which a ratio of the weight of the thermoplastic resin composition (X) to the weight of the inorganic fiber material (Y) per unit area is relatively large and at least one layer (B) in which a ratio of the weight of the thermoplastic resin composition (X) to the weight of the inorganic fiber material (Y) per unit area is relatively small.
[3] The fiber-reinforced resin composite material according to [1] or [2], in which a total weight ratio of the thermoplastic resin composition (X) and the inorganic fiber material (Y) is 70/30 to 30/70.
[4] The fiber-reinforced resin composite material according to any one of [1] to [3], in which a total weight ratio of the thermoplastic resin composition (X) and the inorganic fiber material (Y) is 60/40 to 30/70.
[5] The fiber-reinforced resin composite material according to any one of [2] to [4], in which a thickness ratio between the layer (A) and the layer (B) is 1/99 to 50/50.
[6] The fiber-reinforced resin composite material according to any one of [1] to [5], in which the thermoplastic resin composition (X) further contains a dispersant.
[7] The fiber-reinforced resin composite material according to [6], in which the dispersant includes a copolymer of an α-olefin and an unsaturated carboxylic acid.
[8] The fiber-reinforced resin composite material according to [6] or [7], in which a content of the dispersant with respect to 100 parts by mass of the phosphorus-based flame retardant is more than 0 and 25 parts by mass or less.
[9] The fiber-reinforced resin composite material according to any one of [1] to [8], in which the inorganic fibers constituting the inorganic fiber material (Y) include at least one selected from glass fibers, ceramic fibers, metal fibers, and metal oxide fibers.
[10] The fiber-reinforced resin composite material according to any one of [1] to [9], in which the inorganic fiber material (Y) includes an inorganic fiber woven fabric.
[11] The fiber-reinforced resin composite material according to any one of [1] to [10], in which the thermoplastic resin constituting the thermoplastic resin composition (X) includes a polypropylene-based resin, and a content of the polypropylene-based resin is 15% to 80% by mass with respect to a total weight.
[12] The fiber-reinforced resin composite material according to any one of [1] to [11], in which a content of the phosphorus-based flame retardant is 1% to 30% by mass with respect to the total weight.
[13] A molded body obtained by stamping molding the fiber-reinforced resin composite material according to any one of [1] to [12].
[14] A housing or casing using the fiber-reinforced resin composite material according to any one of [1] to [12].
[15] A battery housing using the fiber-reinforced resin composite material according to any one of [1] to [12].

### Advantageous Effects of Invention

According to the present invention, it is possible to provide a fiber-reinforced resin composite material having both high flame shielding property and strength against shock waves.

### Brief Description of Drawings

Fig. 1 is a schematic view showing one embodiment of the fiber-reinforced resin composite material of the present invention.
Fig. 2 is a schematic view showing a method for producing a fiber-reinforced resin composite material of the present invention.
Fig. 3 is a schematic view showing a method for producing a fiber-reinforced resin composite material of Example 1.
Fig. 4 is a schematic view showing a method for producing a fiber-reinforced resin composite material of Example 2.

Hereinafter, embodiments of the present invention will be described in detail, but the following description is an example of embodiments of the present invention, and the present invention is not limited to these contents in any way.

### [Fiber-Reinforced Resin Composite Material]

The present invention relates to a fiber-reinforced resin composite material containing a thermoplastic resin composition (X) and an inorganic fiber material (Y). In the composite material of the present invention, the thermoplastic resin composition (X) contains a thermoplastic resin and an intumescent flame retardant which is a phosphorus-based flame retardant. The inorganic fiber material (Y) has an elongation at maximum load of 5% or less.

The inorganic fiber material (Y) used in the fiber-reinforced resin composite material of the present invention is an inorganic fiber texture in which a plurality of inorganic fibers are assembled and a certain or amorphous texture form is maintained. When the elongation at maximum load of the inorganic fiber material (Y) is 5% or less, the flame shielding property and the strength against shock waves when the inorganic fiber material (Y) constitutes a fiber-reinforced resin composite material together with the thermoplastic resin composition (X) can be secured. This is considered to be because the inorganic fiber material (Y) having an elongation at maximum load of 5% or less is appropriately impregnated with the thermoplastic resin composition (X) and integrated therewith, so that the mechanical strength is improved, and the phosphorus-based flame retardant contained in the thermoplastic resin composition (X) forms a dense char in the gaps of the fiber structure of the inorganic fiber material (Y), so that the flame shielding property at the time of contact with flame and the strength against shock waves are simultaneously exhibited.

The elongation at maximum load of the inorganic fiber material (Y) may be 4% or less, or 3% or less, or 2% or less from the viewpoint of improving the flame shielding property and the strength against shock waves. On the other hand, the elongation is preferably 0.1% or more from the viewpoint of facilitating the molding processability.

In one preferred embodiment, the composite material of the present invention can be a laminate of two or more layers including at least one layer (A) in which a ratio of the weight of the thermoplastic resin composition (X) to the weight of the inorganic fiber material (Y) per unit area is relatively large and at least one layer (B) in which a ratio of the weight of the thermoplastic resin composition (X) to the weight of the inorganic fiber material (Y) per unit area is relatively small.

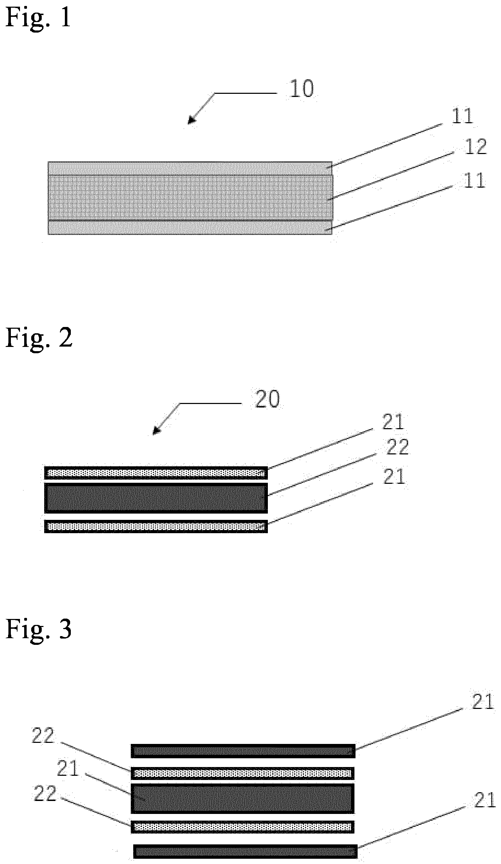

A layer structure of one embodiment of the fiber-reinforced resin composite material of the present invention will be described with reference to Fig. 1.

As shown in Fig. 1, one embodiment of the fiber-reinforced resin composite material of the present invention includes at least one layer (A) (11 in Fig. 1) in which the ratio of the weight of the thermoplastic resin composition (X) to the weight of the inorganic fiber material (Y) per unit area is relatively large, and at least one layer (B) (12 in Fig. 1) in which the ratio of the weight of the thermoplastic resin composition (X) to the weight of the inorganic fiber material (Y) per unit area is relatively small. In the example shown in Fig. 1, there are two layers (A) and one layer (B), and the layer (B) is sandwiched between the layers (A).

Such a layer structure can be achieved, for example, by using a sheet made of the inorganic fiber material (Y) and a sheet made of the thermoplastic resin composition (X). That is, as shown in Fig. 2, a laminate 20 in which a sheet 22 made of the inorganic fiber material (Y) is sandwiched between two sheets 21 made of the thermoplastic resin composition (X) is prepared, and the laminate 20 is pressed from above and below at a constant temperature and pressure, thereby obtaining the laminate. The thermoplastic resin composition (X) is melted and impregnated into the sheet 22 made of the inorganic fiber material (Y). By cooling and solidifying this, the fiber-reinforced resin composite material 10 according to one embodiment of the present invention having the layer (B) (12 in Fig. 1) sandwiched between the two layers (A) (11 in Fig. 1) is obtained. The reason why the layer (A) and the layer (B) are formed as separate layers in the fiber-reinforced resin composite material of the present invention is that a layer containing the thermoplastic resin composition (X) as a main component is formed when the thermoplastic resin composition (X) is not completely impregnated into the inorganic fiber material (Y) having an elongation at maximum load of 5% or less. Therefore, by adjusting the impregnation property of the thermoplastic resin composition (X) into the inorganic fiber material (Y), it is possible to obtain a fiber-reinforced resin composite material having a laminate structure in which the layer (A) and the layer (B) are separated as described above, or it is also possible to obtain a fiber-reinforced resin composite material which does not have a separated layer such as the layer (A) and the layer (B) and is composed of one uniform layer.

The thickness ratio of the layer (A) to the layer (B) is preferably in a range of 1/99 to 50/50. When the thickness ratio is within the above range, the degree of impregnation of the thermoplastic resin composition (X) into the inorganic fiber material (Y) can be controlled to be within a suitable range, and a fiber-reinforced resin composite material having high flame shielding property, flame resistance, and strength against shock waves can be obtained. From the above viewpoints, the thickness ratio of the layer (A) to the layer (B) is more preferably in a range of 2/98 to 40/60, and still more preferably in a range of 5/95 to 30/70.

Further, the weight ratio of the thermoplastic resin composition (X) to the inorganic fiber material (Y) (hereinafter referred to as "X/Y") in the entire fiber-reinforced resin composite material is preferably in a range of 70/30 to 20/80. The thermoplastic resin composition (X) imparts high flame shielding property and flame resistance to the fiber-reinforced resin composite material of the present invention, and the inorganic fiber material (Y) imparts strength against shock waves to the fiber-reinforced resin composite material of the present invention, and the balance between these is important.

Therefore, when X/Y is within the above range, a fiber-reinforced resin composite material having high flame shielding property, flame resistance, and strength against shock waves can be obtained. From the above viewpoints, X/Y is more preferably in a range of 70/30 to 30/70, still more preferably in a range of 65/35 to 30/70, yet still more preferably in a range of 60/40 to 30/70, and particularly preferably in a range of 60/40 to 35/65.

Hereinafter, each component used in the present invention and the obtained fiber-reinforced resin composite material will be described in detail.

### [Thermoplastic Resin Composition (X)]

The thermoplastic resin composition (X) according to the present invention contains at least (a) a thermoplastic resin and (b) an intumescent flame retardant which is a phosphorus-based flame retardant. Hereinafter, the thermoplastic resin (a) and the phosphorus-based flame retardant (b) (including the intumescent flame retardant) will be described in detail.

### <(a) Thermoplastic Resin>

The thermoplastic resin used in the present invention is not particularly limited, and examples thereof include a polyolefin resin, a polycarbonate resin, a polyester resin, an acrylonitrile styrene resin, an ABS resin, a polyamide resin, and a modified polyphenylene oxide. These may be used alone, or two or more kinds thereof may be used in combination. For example, the thermoplastic resin (a) may be a composite resin of two or more kinds of the above-described thermoplastic resins.

The polyolefin resin is not particularly limited, and examples thereof include the resins described below. The polyester resin is not particularly limited, and examples thereof include polybutylene terephthalate. The polyamide resin is not particularly limited, and examples thereof include nylon 66 and nylon 6.

Among them, the present invention is particularly useful in the case of containing at least a polyolefin resin as the thermoplastic resin (a). In the present invention, the term "polyolefin resin" means a resin in which the proportion of an olefin unit or a cycloolefin unit is 90 mol% or more with respect to 100 mol% of all the constitutional units constituting the resin.

The proportion of the olefin unit or the cycloolefin unit with respect to 100 mol% of all the constitutional units constituting the polyolefin resin is preferably 95 mol% or more and particularly preferably 98 mol% or more.

Examples of the polyolefin resin include α-olefin polymers such as polyethylene, polypropylene, polybutene, poly(3-methyl-1-butene), poly(3-methyl-1-pentene), and poly(4-methyl-1-pentene); α-olefin copolymers such as an ethylene-propylene block or random copolymer, an α-olefin-propylene block or random copolymer having 4 or more carbon atoms, an ethylene-methyl methacrylate copolymer, and an ethylene-vinyl acetate copolymer; and cycloolefin polymers such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemi-isotactic polypropylene, and stereoblock polypropylene. In the α-olefin-propylene block or random copolymer having 4 or more carbon atoms, examples of the α-olefin having 4 or more carbon atoms include butene, 3-methyl-1-butene, 3-methyl-1-pentene, and 4-methyl-1-pentene. These polyolefin resins may be used singly, or two or more kinds thereof may be used in combination.

Among the above-mentioned olefin resins, a polypropylene resin (hereinafter sometimes referred to as a "PP resin") is particularly preferred.

### (Melt Flow Rate (MFR))

The melt flow rate (hereinafter, sometimes abbreviated as MFR) (230°C, 2.16 kg load) of the thermoplastic resin (a) used in the present invention is preferably 40 to 500 g/10 min. When the MFR is 40 g/10 min or more, for example, defects do not occur when the fiber-reinforced resin composite material is subjected to stamping molding, and processability does not deteriorate. On the other hand, when the MFR is 500 g/10 min or less, burrs are not generated in the production of a fiber-reinforced resin composite material (sheet). From the above viewpoints, the MFR is preferably 50 to 400 g/10 min, more preferably 60 to 400 g/10 min, and more preferably 70 to 300 g/10 min.

The MFR of the thermoplastic resin (a) can be adjusted, for example, by controlling the hydrogen concentration or the like during polymerization.

The MFR is a value measured in accordance with JIS K 7210.

### (Content of (a) Thermoplastic Resin)

The content of the thermoplastic resin (a) in the fiber-reinforced resin composite material of the present invention is not particularly limited, and is preferably 15% to 80% by mass. When the content of the thermoplastic resin is 15% by mass or more, the molding processability becomes particularly good, and the fiber-reinforced resin composite material is easily molded. On the other hand, when the content is 80% by mass or less, the flame retardant, the dispersant, and the inorganic fibers can be contained in sufficient amounts, and good flame shielding property can be obtained. From the above viewpoints, the content of the thermoplastic resin in the fiber-reinforced resin composite material is preferably 35% to 70% by mass, and more preferably 40% to 60% by mass.

### <(a-1) Polypropylene-Based Resin>

As the thermoplastic resin (a) used in the fiber-reinforced resin composite material of the present invention, it is preferable to contain a polypropylene-based resin. Examples of the polypropylene-based resin include propylene homopolymers and propylene-α-olefin copolymers. Here, the propylene-α-olefin copolymer may be either a random copolymer or a block copolymer.

### (a-Olefin)

Examples of the α-olefin constituting the copolymer include ethylene, 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, and 1-octene. These may be copolymerized with propylene using one kind thereof, or may be copolymerized with propylene using two or more kinds thereof. Among these, from the viewpoint of improving the impact resistance of the fiber-reinforced resin composite material, ethylene or 1-butene having a large effect is preferable, and ethylene is most preferable.

### (Propylene-Ethylene Random Copolymer)

In the case of a random copolymer of propylene and ethylene, the content of the propylene unit is preferably 90% to 99.5% by mass, and more preferably 92% to 99% by mass, and the content of the ethylene unit is preferably 0.5% to 10% by mass, and more preferably 1% to 8% by mass. When the ethylene unit is equal to or more than the above lower limit value, sufficient impact resistance strength of the fiber-reinforced resin composite material will be obtained, and when it is equal to or less than the above upper limit value, sufficient rigidity will be maintained.

The contents of the propylene unit and the ethylene unit in the random copolymer of propylene and ethylene can be adjusted by controlling the composition ratio of propylene and ethylene at the time of polymerization of the random copolymer of propylene and ethylene.

In addition, the propylene content of the random copolymer of propylene and ethylene is a value measured using a cross-fractionation apparatus, FT-IR, or the like, and for the measurement conditions and the like, for example, a method described in JP 2008-189893 A may be used.

### (Melt Flow Rate (MFR))

The MFR (230°C, 2.16 kg load) of the polypropylene-based resin (a-1) used in the present invention is preferably 40 to 500 g/10 min. When the MFR is 40 g/10 min or more, defects do not occur at the time of obtaining a molded body by stamping molding or the like, and processability does not deteriorate. On the other hand, when the MFR is 500 g/10 min or less, burrs are not generated in the production of a fiber-reinforced resin composite material. From the above viewpoints, the MFR is preferably 50 to 400 g/10 min, more preferably 60 to 400 g/10 min, and more preferably 70 to 300 g/10 min.

The MFR of the polypropylene-based resin (a-1) (propylene homopolymer) can be adjusted by controlling the hydrogen concentration or the like during polymerization.

The MFR is a value measured in accordance with JIS K 7210.

### (Content of (a-1) Polypropylene-Based Resin)

The content of the polypropylene-based resin (a-1) in the fiber-reinforced resin composite material of the present invention is not particularly limited, and is preferably 15% to 80% by mass. When the content of the polypropylene-based resin is 15% by mass or more, the molding processability becomes sufficient, and the molded body is easily molded. On the other hand, when the content is 80% by mass or less, the flame retardant, the dispersant, and the inorganic fibers can be contained in sufficient amounts, and sufficient flame shielding property can be obtained. From the above viewpoints, the content of the polypropylene-based resin in the fiber-reinforced resin composite material is more preferably 35% to 70% by mass, and still more preferably 40% to 60% by mass.

### <Modified Polyolefin-Based Resin>

The fiber-reinforced resin composite material of the present invention can further contain a modified polyolefin-based resin in addition to the polypropylene-based resin. Specific examples of the modified polyolefin-based resin include an acid-modified polyolefin-based resin and a hydroxy-modified polyolefin-based resin, and these resins can be used alone or in combination.

The types of the acid-modified polyolefin-based resin and the hydroxy-modified polyolefin-based resin used as the modified polyolefin-based resin are not particularly limited, and may be conventionally known ones.

### (Acid-Modified Polyolefin-Based Resin)

Examples of the acid-modified polyolefin-based resin include those obtained by graft-copolymerizing a polyolefin such as polyethylene, polypropylene, an ethylene-α-olefin copolymer, an ethylene-α-olefin-non-conjugated diene compound copolymer (EPDM or the like), or an ethylene-aromatic monovinyl compound-conjugated diene compound copolymerized elastomer with an unsaturated carboxylic acid such as maleic acid or maleic anhydride to chemically modify the polyolefin.

This graft copolymerization is carried out, for example, by reacting the above polyolefin with an unsaturated carboxylic acid in an appropriate solvent using a radical generator such as benzoyl peroxide. The component of an unsaturated carboxylic acid or a derivative thereof can also be introduced into the polymer chain by random or block copolymerization with a monomer for polyolefin.

Examples of the unsaturated carboxylic acid used for the modification include compounds having a polymerizable double bond into which a carboxy group such as maleic acid, fumaric acid, itaconic acid, acrylic acid, and methacrylic acid and, if necessary, a functional group such as a hydroxy group and an amino group are introduced.

Examples of the derivative of the unsaturated carboxylic acid include acid anhydrides, esters, amides, imides, and metal salts thereof, and specific examples thereof include maleic anhydride, itaconic anhydride, methyl acrylate, ethyl acrylate, butyl acrylate, and methyl methacrylate. Among these, maleic anhydride is preferable.

Preferred examples of the acid-modified polyolefin-based resin include a resin modified by graft-polymerizing maleic anhydride to an olefin-based polymer having ethylene and/or propylene as a main polymer constituent unit, and a resin modified by copolymerizing an olefin having ethylene and/or propylene as a main component with maleic anhydride. Specific examples thereof include a combination of polyethylene/maleic anhydride-grafted ethylene-butene-1 copolymer and a combination of polypropylene/maleic anhydride-grafted polypropylene.

### (Hydroxy-Modified Polyolefin-Based Resin)

The hydroxy-modified polyolefin-based resin is a modified polyolefin-based resin containing a hydroxy group. The hydroxy-modified polyolefin-based resin may have a hydroxy group at an appropriate site, for example, at the end of the main chain or in a side chain.

Examples of the olefin-based resin constituting the hydroxy-modified polyolefin-based resin include a homopolymer or a copolymer of an α-olefin such as ethylene, propylene, butene, 4-methylpentene-1, hexene, octene, nonene, decene, and dodecene, and a copolymer of the α-olefin and a copolymerizable monomer.

Preferable examples of the hydroxy-modified polyolefin-based resin include hydroxy-modified polyethylene-based resins such as low density, medium density, or high-density polyethylene, linear low-density polyethylene, ultra high molecular weight polyethylene, ethylene-(meth)acrylic acid ester copolymer, and ethylene-vinyl acetate copolymer; and hydroxy-modified polypropylene-based resins such as polypropylene homopolymer such as isotactic polypropylene, random copolymer of propylene and an α-olefin (for example, ethylene, butene, hexane), a propylene-α-olefin block copolymer, and hydroxy-modified poly(4-methylpentene-1).

### <(b) Phosphorus-Based Flame Retardant>

The fiber-reinforced resin composite material of the present invention contains a phosphorus-based flame retardant (b). The phosphorus-based flame retardant is preferable from the viewpoint of improving the flame shielding property and from the viewpoint of having excellent flame retardancy without biopersistence.

In addition, the fiber-reinforced resin composite material of the present invention contains an intumescent flame retardant as the phosphorus-based flame retardant from the viewpoint of improving flame shielding property.

The intumescent flame retardant is a flame retardant that suppresses combustion of a material by forming a surface expansion layer (intumescent) that prevents radiant heat from a combustion source and diffusion of combustion gas, smoke, and the like from a combustion object to the outside. Examples of the intumescent flame retardant include a salt of (poly)phosphoric acid and a nitrogen compound. Examples of the nitrogen compound include ammonia, melamine, piperazine, and other nitrogen compounds described later.

Specific examples of the intumescent flame retardant include ammonium salts and amine salts of (poly)phosphoric acid such as ammonium polyphosphate, melamine polyphosphate, piperazine polyphosphate, ammonium pyrophosphate, melamine pyrophosphate, and piperazine pyrophosphate. Among these, it is particularly preferable to contain a compound having a melamine structure or a piperazine structure.

Examples of the nitrogen compound include ammonia, melamine, piperazine, and other nitrogen compounds, and examples of the other nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

The intumescent flame retardant is a salt of a (poly)phosphoric acid and a nitrogen compound, and forms a surface expansion layer (intumescent) which is a foamed char during combustion of the resin composition. By forming the surface expansion layer, diffusion of decomposition products and heat transfer are suppressed, and excellent flame retardancy is exhibited.

Examples of a commercially available product of the intumescent flame retardant include ADK STAB FP-2100J, FP-2200, and FP-2500S (manufactured by ADEKA Corporation).

In the present invention, an intumescent flame retardant is essential, but other flame retardants may be used in combination, and specific examples thereof include phosphorus-based flame retardants other than intumescent flame retardants (hereinafter sometimes referred to as "other phosphorus-based flame retardants"), bromine-based flame retardants, and antimony-based flame retardants.

### (Other Phosphorus-Based Flame Retardants)

The phosphorus-based flame retardant is a phosphorus compound, that is, a compound containing a phosphorus atom in the molecule. The phosphorus-based flame retardant exhibits a flame retardant effect by forming char during combustion of the resin composition.

The phosphorus-based flame retardant may be a known one, and examples thereof include (poly)phosphates and (poly)phosphoric acid esters. Here, "(poly)phosphate" indicates a phosphate or a polyphosphate, and "(poly)phosphoric acid ester" indicates a phosphoric acid ester or a polyphosphoric acid ester.

The phosphorus-based flame retardant is preferably solid at 80°C.

As the phosphorus-based flame retardant, a (poly)phosphate is preferable in terms of flame retardancy.

Examples of the (poly)phosphate include ammonium polyphosphate salt, melamine polyphosphate salt, piperazine polyphosphate salt, piperazine orthophosphate salt, melamine pyrophosphate salt, piperazine pyrophosphate salt, melamine polyphosphate salt, and melamine orthophosphate salt, and examples of other phosphorus-based flame retardants include calcium phosphate and magnesium phosphate.

In the above examples, compounds obtained by replacing melamine or piperazine with other nitrogen compounds can also be used in the same manner. These (poly)phosphates may be used singly, or two or more kinds thereof may be used in combination.

### (Bromine-Based Flame Retardant)

Examples of the bromine-based flame retardant include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistetrabromophthalimide, hexabromocyclododecane, hexabromobenzene, pentabromobenzyl acrylate, 2,2-bis[4'(2",3"-dibromopropoxy)-3',5'-dibromophenyl]-propane, bis[3,5-dibromo-4-(2,3-dibromopropoxy)phenyl]sulfone, and tris(2,3-dibromopropyl) isocyanurate.

### (Antimony-Based Flame Retardant)

Examples of the antimony-based flame retardant include antimony trioxide, antimony tetroxide, antimony pentoxide, sodium pyroantimonate, antimony trichloride, antimony trisulfide, antimony oxychloride, antimony dichloride perchloropentane, and potassium antimonate, and antimony trioxide and antimony pentoxide are particularly preferable.

Among the above-mentioned flame retardants, a non-halogen flame retardant is preferable from the viewpoint of environmental friendliness.

The above-mentioned flame retardants may be used singly, or two or more kinds thereof may be used in combination.

### (Content of (b) Phosphorus-Based Flame Retardant)

The content of the phosphorus-based flame retardant (including the intumescent flame retardant) in the fiber-reinforced resin composite material of the present invention is not particularly limited, and is preferably in a range of 1% to 30% by mass as the content in the thermoplastic resin composition (X). When the content is 1% by mass or more, good flame retardancy can be imparted to the fiber-reinforced resin composite material, and good flame shielding property can be obtained. On the other hand, when the content of the phosphorus-based flame retardant is 30% by mass or less, the thermoplastic resin can be contained at a sufficient content ratio, so that the molding processability becomes better. From the above viewpoints, the content of the flame retardant in the thermoplastic resin composition (X) is more preferably in a range of 1% to 25% by mass, and still more preferably in a range of 3% to 20% by mass.

### <(c) Dispersant>

The dispersant (c) is not particularly limited as long as it can disperse the phosphorus-based flame retardant (b) in the thermoplastic resin (a), and a polymer dispersant can be suitably used in terms of compatibility with the thermoplastic resin (a). Preferably, a dispersant capable of dispersing the phosphorus-based flame retardant (b) in the polypropylene-based resin (a-1) can be suitably used. As the polymer dispersant, a polymer dispersant having a functional group is preferable, and from the viewpoint of dispersion stability, a polymer dispersant having a functional group such as a carboxy group, a phosphoric acid group, a sulfonic acid group, a primary, secondary, or tertiary amino group, a quaternary ammonium salt group, or a group derived from a nitrogen-containing hetero ring such as pyridine, pyrimidine, or pyrazine is preferable.

In the present invention, a polymer dispersant having a carboxy group is preferable, and in particular, when a phosphorus-based flame retardant suitable as a flame retardant is used, a copolymer of an α-olefin and an unsaturated carboxylic acid is preferable. By using the dispersant, the dispersibility of the phosphorus-based flame retardant can be improved, and the content of the flame retardant can be reduced.

### (Copolymer of α-Olefin and Unsaturated Carboxylic Acid)

Regarding the α-olefin unit and the unsaturated carboxylic acid unit in the "copolymer of an α-olefin and an unsaturated carboxylic acid" (hereinafter referred to as "copolymer (c1)") according to the present invention, the proportion of the α-olefin unit in the total 100 mol% thereof is preferably 20 mol% or more and 80 mol% or less.

In the copolymer (c1), the proportion of the α-olefin unit with respect to the total amount of the α-olefin unit and the unsaturated carboxylic acid unit is more preferably 30 mol% or more and more preferably 70 mol% or less. When the proportion of the α-olefin is equal to or more than the above lower limit value, the compatibility with the polyolefin-based resin (a) will be more excellent, and when it is equal to or less than the above upper limit value, the compatibility with the phosphorus-based flame retardant (b) will be more excellent.

In the copolymer (c1), as the α-olefin, an α-olefin having 5 or more carbon atoms is preferable, and an α-olefin having 10 or more and 80 or less carbon atoms is more preferable. When the α-olefin has 5 or more carbon atoms, the compatibility with the thermoplastic resin (a) tends to be better, and when the α-olefin has 80 or less carbon atoms, it is advantageous in terms of raw material cost. From the above viewpoints, the number of carbon atoms of the α-olefin is more preferably 12 or more and 70 or less, and particularly preferably 18 or more and 60 or less.

In the copolymer (c1), examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbornane-5-ene-2,3-dicarboxylic acid, and esters, anhydrides, and imides of these unsaturated carboxylic acids. The term "(meth)acrylic acid" refers to acrylic acid or methacrylic acid.

Specific examples of the ester, anhydride, or imide of the unsaturated carboxylic acid include (meth)acrylic acid esters such as methyl (meth)acrylate, ethyl (meth)acrylate, butyl (meth)acrylate, 2-ethylhexyl (meth)acrylate, and glycidyl (meth)acrylate; dicarboxylic acid anhydrides such as maleic anhydride, itaconic anhydride, citraconic anhydride, and 5-norbornene-2,3-dicarboxylic acid anhydride; and maleimide compounds such as maleimide, N-ethylmaleimide, and N-phenylmaleimide. One kind of these may be used singly, or two or more kinds thereof may be used in combination.

Among the above, esters and dicarboxylic acid anhydrides are preferable from the viewpoint of copolymerization reactivity. Among them, dicarboxylic acid anhydrides are preferable, and maleic anhydride is particularly preferable, from the viewpoint of compatibility with a phosphorus-based flame retardant suitable as a flame retardant.

The weight-average molecular weight of the copolymer (c1) is preferably 2,000 or more, and more preferably 3,000 or more, and is preferably 50,000 or less, and more preferably 30,000 or less. When the weight-average molecular weight of the copolymer (c1) is within the above range, the dispersibility of the phosphorus-based flame retardant (b) is more excellent.

The weight-average molecular weight of the copolymers (c1) is a value in terms of standard polystyrene measured by dissolving the copolymer (c1) in tetrahydrofuran (THF) and performing gel permeation chromatography.

Examples of a commercially available product of the copolymer (c1) include Licolub CE2 (manufactured by Clariant (Japan) K.K.) and DIACARNA 30M (manufactured by Mitsubishi Chemical Corporation).

The content of the dispersant (c) with respect to 100 parts by mass of the phosphorus-based flame retardant (b) in the thermoplastic resin composition (X) according to the present invention is in a range of more than 0 and 25 parts by mass or less, and preferably in a range of 0.01 to 10 parts by mass.

According to the investigation of the present inventors, when a phosphorus-based flame retardant is uniformly dispersed and present in inorganic fibers constituting a fiber-reinforced resin composite material using a thermoplastic resin as a matrix resin, the flame shielding property of the fiber-reinforced resin composite material can be significantly improved. Although the detailed mechanism is unknown, the present inventors speculate as follows. That is, when the flame retardant is uniformly dispersed in the resin between the inorganic fibers, the char formed by the flame retardant being in contact with the flame is fixed in the gaps between the inorganic fibers. Furthermore, the gaps between the inorganic fibers limit the size of the char formed by the expansion during the contact with the flame, so that the size of the char formed is uniform. It is considered that the combination of the char fixing effect of the inorganic fibers and the uniformity of the size of the char forms a dense char and significantly improves the flame shielding property of the fiber-reinforced resin composite material. Based on these findings, the present inventors have found that by setting the ratio of the content of the dispersant to the content of the flame retardant to a specific range, the flame retardant can be controlled to be uniformly present in the resin between the inorganic fibers, and the flame shielding property of the fiber-reinforced resin composite material can be significantly improved.

For the above reasons, when the content of the dispersant (c) is more than 0, the dispersibility of the phosphorus-based flame retardant (b) becomes sufficient, and sufficient flame shielding property can be imparted to the fiber-reinforced resin composite material. On the other hand, when the content of the dispersant (c) is 25 parts by mass or less, the physical properties of the fiber-reinforced resin composite material become sufficient. From the same viewpoint, the content of the dispersant (c) is preferably 0.01 parts by mass or more, more preferably 0.1 parts by mass or more, still more preferably 1 part by mass or more, and particularly preferably 2 parts by mass or more. On the other hand, the upper limit value is more preferably 20 parts by mass or less, still more preferably 15 parts by mass or less, yet still more preferably 10 parts by mass or less, even more preferably 5 parts by mass or less, and particularly preferably 3 parts by mass or less.

The proportion of the dispersant (c) with respect to 100 parts by mass of the total of the thermoplastic resin (a) and the phosphorus-based flame retardant (b) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, still more preferably 2.0 parts by mass or less, yet still more preferably 1.5 parts by mass or less, and even more preferably 1.0 parts by mass or less. When the proportion of the dispersant (c) is equal to or more than the lower limit value, the phosphorus-based flame retardant (b) is more favorably dispersed, and the flame shielding property and physical properties of the obtained fiber-reinforced resin composite material and the appearance of the obtained molded body are more favorable. When the proportion of the dispersant (c) is equal to or less than the upper limit value, the influence of the dispersant (c) on the flame shielding property of the fiber-reinforced resin composite material can be further suppressed. In particular, the proportion of the dispersant (c) with respect to 100 parts by mass of the total of the polyolefin-based resin and the phosphorus-based flame retardant (b) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, still more preferably 2.0 parts by mass or less, yet still more preferably 1.5 parts by mass or less, and even more preferably 1.0 parts by mass or less.

In addition, with respect to the inorganic fiber woven fabric which is the inorganic fiber material (Y) described in detail below, the proportion of the dispersant (c) with respect to 100 parts by mass of the inorganic fibers constituting the inorganic fiber woven fabric is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, and still more preferably 2.0 parts by mass or less. When the proportion of the dispersant (c) is equal to or more than the lower limit value, the flame shielding property and physical properties of the obtained fiber-reinforced resin composite material and the appearance of the obtained molded body are more favorable. When the proportion of the dispersant (c) is equal to or less than the upper limit value, the influence of the dispersant (c) on the flame shielding property of the fiber-reinforced resin composite material can be further suppressed.

### <Inorganic Fiber Material (Y)>

The fiber-reinforced resin composite material of the present invention contains an inorganic fiber material (Y). The inorganic fiber material (Y) is an inorganic fiber texture in which a plurality of inorganic fibers are assembled and a certain or amorphous texture form is maintained. The inorganic fiber material (Y) has an elongation at maximum load of 5% or less.

Specific examples of the inorganic fiber material having such an elongation at maximum load include an inorganic fiber woven fabric.

The inorganic fiber woven fabric is a woven fabric composed of warp and weft made of inorganic fibers. The woven fabric texture is not particularly limited, and may be any of a plain weave, a twill weave, a satin weave, and the like. In the woven fabric, it is preferable that the gaps between the fiber bundles of the warp constituting the woven fabric and the gaps between the weft bundles are each 0.5 mm or less. When the gap is 0.5 mm or less, high flame shielding property is obtained.

As the inorganic fibers constituting the inorganic fiber material (Y), various fibers can be used, and examples thereof include metal oxide fibers such as a glass fiber, rock wool, an alumina fiber, and a silica alumina fiber, ceramic fibers such as a potassium titanate fiber, a calcium silicate (wollastonite) fiber, and a ceramic fiber, carbon fibers, and metal fibers. These inorganic fibers may be used alone or in combination of two or more kinds thereof.

Among the inorganic fibers, at least one kind selected from a glass fiber and an alumina fiber is preferable from the viewpoint of flame shielding property and processability.

The inorganic fibers may include two or more kinds of inorganic fibers having different melting temperatures. As the combination of two or more kinds of inorganic fibers having different melting temperatures, it is preferable that at least one kind is a glass fiber and the other one or more kinds are a combination of one or more kinds of inorganic fibers selected from the group consisting of an alumina fiber, a silica fiber, an alkaline earth silicate fiber (biosoluble), and a carbon fiber. By including two or more kinds of inorganic fibers having different melting temperatures, it is possible to effectively prevent deterioration of the function of the flame shielding property.

In addition, the inorganic fiber used in the present invention may be used in combination with a sizing agent or a surface treatment agent. Examples of the sizing agent or the surface treatment agent include compounds having a functional group such as an epoxy-based compound, a silane-based compound, and a titanate-based compound.

The average fiber diameter of the inorganic fibers is preferably 3 to 25 µm. In addition, the average fiber length is preferably 0.1 mm or more, more preferably 1 mm or more, and still more preferably 5 mm or more.

Since the preferred ranges of the average fiber diameter and the average fiber length vary depending on the type of the inorganic material constituting the inorganic fibers, specific preferred ranges thereof will be described later.

The fiber diameter can be measured using a scanning electron microscope or the like, and the average fiber diameter can be obtained by, for example, measuring the fiber diameters of 10 fibers at random and calculating the average value. The fiber length can be measured using a ruler, calipers, or the like from an image enlarged by a microscope or the like as necessary, and the average fiber length can be obtained by, for example, measuring the fiber lengths of 10 fibers at random and calculating the average value.

The content of the inorganic fiber material in the fiber-reinforced resin composite material of the present invention is 1% to 80% by mass. When the content of the inorganic fiber material is 1% by mass or more, the strength, rigidity, and impact resistance of the fiber-reinforced resin composite material are sufficient, and when the content is 80% by mass or less, it is preferable in terms of production and processing of the fiber-reinforced resin composite material. In addition, when the content of the inorganic fibers is 80% by mass or less, the specific gravity of the fiber-reinforced resin composite material is reduced, and the weight reduction effect as a substitute for metal becomes remarkable.

From the above viewpoints, the content of the inorganic fiber material (Y) in the fiber-reinforced resin composite material is more preferably 3% to 60% by mass, still more preferably 10% to 50% by mass, and particularly preferably 30% to 45% by mass.

### (Glass Fiber)

One example of the inorganic fibers suitable for the fiber-reinforced resin composite material of the present invention is glass fibers. The glass fibers may be, for example, long fibers having an average fiber length of 30 mm or more, or may be fibers (chopped strands) having a short average fiber length, and from the viewpoints of flame shielding property, rigidity, impact resistance, and the like, it is preferable to use glass fibers having a long average fiber length.

More specifically, the average fiber length is preferably 5 mm or more. In a case where the average fiber length is 5 mm or more, the strength and the impact resistance of the fiber-reinforced resin composite material become satisfactory. From the above viewpoints, the average fiber length of the glass fibers is preferably 5 mm or more, and more preferably 30 mm or more.

In addition, the upper limit of the average fiber length of the glass fibers is not particularly limited, and for example, in a case where a pellet produced by a pultrusion method using the glass fibers is used, the length of the pellet is the fiber length of the glass fibers, and thus the upper limit of the average fiber length of the glass fibers is about 20 mm at the maximum. In the swirl mat system using long glass fibers, the length of the glass fibers in the roving used for production is the maximum fiber length, which is about 17,000 m (17 km), but when cut according to the size of the fiber-reinforced resin composite material, the cut length is the maximum fiber length.

In addition, the average fiber diameter of the glass fibers is preferably in a range of 9 to 25 µm. When the average fiber diameter is 9 µm or more, the rigidity and the impact resistance of the fiber-reinforced resin composite material become sufficient, and on the other hand, when the average fiber diameter is 25 µm or less, the strength of the fiber-reinforced resin composite material becomes satisfactory. From the above viewpoints, the average fiber diameter of the glass fibers is more preferably in a range of 10 to 15 µm.

The average fiber diameter and the average fiber length of the glass fibers can be measured by the above-described method.

The material of the glass fibers used in the present invention is not particularly limited, and may be any of alkali-free glass, low-alkali glass, and alkali-containing glass, and those having various compositions conventionally used as glass fibers can be used.

### (Alumina Fiber)

One example of the inorganic fibers suitable for the fiber-reinforced resin composite material of the present invention is alumina fibers. The alumina fibers are usually fibers composed of alumina and silica, and in the fiber-reinforced resin-composite material of the present invention, the alumina/silica composition ratio (mass ratio) of the alumina fibers is preferably in a range called a mullite composition or high alumina composition of 65/35 to 98/2, more preferably 70/30 to 95/5, and particularly preferably 70/30 to 74/26.

The average fiber diameter of the alumina fibers is preferably in a range of 3 to 25 µm, and it is preferable that the alumina fibers do not substantially contain fibers having a fiber diameter of 3 µm or less. Here, the expression "does not substantially contain fibers having a fiber diameter of 3 µm or less" means that the content of fibers having a fiber diameter of 3 µm or less is 0.1% by mass or less of the total mass of the inorganic fibers.

In addition, the average fiber diameter of the alumina fibers is more preferably 5 to 8 µm. When the average fiber diameter of the inorganic fibers is too large, the resilience and toughness of the mat-like inorganic fiber aggregate layer decrease, and conversely, when the average fiber diameter is too small, the amount of dust floating in the air increases, and the probability that inorganic fibers having a fiber diameter of 3 µm or less are contained increases.

The alumina fibers are fibers having an average fiber length of preferably 5 mm or more, more preferably 30 mm or more, and still more preferably 50 mm or more, and also preferably 3.0 × 10³ mm or less, and more preferably 1.0 × 10³ mm or less. When the average fiber length and the average fiber diameter of the alumina fibers are within these ranges, the strength and the impact resistance of the fiber-reinforced resin composite material become satisfactory.

### (Carbon Fiber)

The preferred range of the carbon fibers is also equivalent to that of the glass fibers.

### <Optional Additional Components>

In the fiber-reinforced resin composite material of the present invention, in addition to the above-described components, optional additional components can be blended for the purpose of imparting other effects, such as further improving the effects of the present invention, to the extent that the effects of the present invention are not significantly impaired.

Specific examples thereof include colorants such as pigments, light stabilizers such as hindered amine-based light stabilizers, ultraviolet absorbers such as benzotriazole-based ultraviolet absorbers, nucleating agents such as sorbitol-based nucleating agents, antioxidants such as phenol-based and phosphorus-based antioxidants, antistatic agents such as nonionic surfactants, neutralizing agents such as inorganic compounds, antibacterial and antifungal agents such as thiazole-based antibacterial and antifungal agents, flame retardants and flame retardant aids such as halogen compounds and lignophenols, plasticizers, dispersants such as organic metal salt-based dispersants, lubricants such as fatty acid amide-based lubricants, metal deactivators such as nitrogen compounds, polyolefin resins other than the polypropylene-based resins, thermoplastic resins such as polyamide resins and polyester resins, and elastomers (rubber components) such as olefin-based elastomers and styrene-based elastomers.

Two or more kinds of these optional additional components may be used in combination.

As the colorant, for example, inorganic or organic pigments are effective for imparting or improving the colored appearance, appearance, texture, commercial value, weather resistance, durability, and the like of the polypropylene-based resin composition and the molded body thereof.

Specific examples of the inorganic pigments include carbon blacks such as furnace carbon and ketjen carbon, titanium oxide, iron oxides (red iron oxide and the like), chromic acid (yellow lead and the like), molybdic acid, selenium sulfide, and ferrocyanides, and specific examples of the organic pigments include azo-based pigments including hardly soluble azo lakes, soluble azo lakes, insoluble azo chelates, condensable azo chelates, and other azo chelates, phthalocyanine-based pigments such as phthalocyanine blue and phthalocyanine green, threne-based pigments such as anthraquinone, perinone, perylene, and thioindigo, dye lakes, quinacridone-based pigments, dioxazine-based pigments and isoindolinone-based pigments. In order to obtain a metallic tone or a pearl tone, aluminum flakes and a pearl pigment can be contained. In addition, a dye can also be contained.

As light stabilizers and ultraviolet absorbers, for example, hindered amine compounds, benzotriazole-based compounds, benzophenone-based compounds, salicylate-based compounds, and the like are effective for imparting and improving weather resistance, durability, and the like of polypropylene-based resin compositions and the molded body thereof, and are effective for further improving weather-resistance discoloration property.

Specific examples of the hindered amine compounds include a condensate of dimethyl succinate and 1-(2-hydroxyethyl)-4-hydroxy-2,2,6,6-tetramethylpiperidine; poly[6-(1,1,3,3-tetramethylbutyl)imino-1,3,5-triazine-2,4-diyl][(2,2,6,6-tetramethyl-4-piperidyl)imino]-hexamethylene-[(2,2,6,6-tetramethyl-4-piperidyl)imino]]; tetrakis(2,2,6,6-tetramethyl-4-piperidyl)1,2,3,4-butane tetracarboxylate; tetrakis(1,2,2,6,6-pentamethyl-4-piperidyl)1,2,3,4-butanetetracarboxylate; bis(1,2,2,6,6-pentamethyl-4-piperidyl)sebacate; and bis-2,2,6,6-tetramethyl-4-piperidyl sebacate. Specific examples of the benzotriazole-based compounds include 2-(2'-hydroxy-3',5'-di-t-butylphenyl)-5-chlorobenzotriazole; and 2-(2'-hydroxy-3'-t-butyl-5'-methylphenyl)-5-chlorobenzotriazole. Specific examples of the benzophenone-based compounds include 2-hydroxy-4-methoxybenzophenone; and 2-hydroxy-4-n-octoxybenzophenone. Specific examples of the salicylate-based compounds include 4-t-butylphenyl salicylate; and 2,4-di-t-butylphenyl 3',5'-di-t-butyl-4'-hydroxybenzoate.

Here, the method of using the light stabilizer and the ultraviolet absorber in combination is preferable because the effect of improving weather resistance, durability, weather-resistance discoloration property, and the like is large.

As the antioxidant, for example, a phenol-based, phosphorus-based, or sulfur-based antioxidant is effective for imparting and improving heat resistance stability, processing stability, heat aging resistance, and the like of the polypropylene-based resin composition and the molded body thereof.

In addition, as the antistatic agent, for example, a nonionic or cationic antistatic agent is effective for imparting and improving antistatic property of the polypropylene-based resin composition and the molded body thereof.

Examples of the olefin-based elastomer include ethylene-α-olefin copolymer elastomers such as an ethylene-propylene copolymer elastomer (EPR), an ethylene-butene copolymer elastomer (EBR), an ethylene-hexene copolymer elastomer (EHR), and an ethylene-octene copolymer elastomer (EOR); ethylene-α-olefin-diene terpolymer elastomers such as an ethylene-propylene-ethylidenenorbornene copolymer, an ethylene-propylene-butadiene copolymer, and an ethylene-propylene-isoprene copolymer; and a styrene-butadiene-styrene triblock copolymer elastomer (SBS).

Examples of the styrene-based elastomer include styrene-based elastomers such as a styrene-isoprene-styrene triblock copolymer elastomer (SIS), a styrene-ethylene-butylene copolymer elastomer (SEB), a styrene-ethylene-propylene copolymer elastomer (SEP), a styrene-ethylene-butylene-styrene copolymer elastomer (SEBS), a styrene-ethylene-butylene-ethylene copolymer elastomer (SEBC), a hydrogenated styrene-butadiene elastomer (HSBR), a styrene-ethylene-propylene-styrene copolymer elastomer (SEPS), a styrene-ethylene-ethylene-propylene-styrene copolymer elastomer (SEEPS), a styrene-butadiene-butylene-styrene copolymer elastomer (SBBS), a partially hydrogenated styrene-isoprene-styrene copolymer elastomer, and a partially hydrogenated styrene-isoprene-butadiene-styrene copolymer elastomer, and hydrogenated polymer-based elastomers such as an ethylene-ethylene-butylene-ethylene copolymer elastomer (CEBC).

Among them, it is preferable to use an ethylene-octene copolymer elastomer (EOR) and/or an ethylene-butene copolymer elastomer (EBR) from the viewpoint that appropriate flexibility or the like is easily imparted and impact resistance tends to be excellent in the polypropylene-based resin composition of the present invention and the molded body thereof.

### <Method for Producing Thermoplastic Resin Composition (X)>

The thermoplastic resin composition (X) according to the present invention contains (a) a thermoplastic resin, a modified polyolefin-based resin added as necessary, (b) a phosphorus-based flame retardant, and (c) a dispersant added as necessary, as described above. In addition, an optional additional component may be further blended. In the thermoplastic resin composition (X), when the thermoplastic resin (a) is the polypropylene-based resin (a-1), the thermoplastic resin composition (X) may be particularly referred to as a polypropylene-based resin composition (hereinafter, may be described as a "PP composition").

As a method for producing the thermoplastic resin composition (X) or the PP composition, a conventionally known method can be used, and the thermoplastic resin composition (X) or the PP composition can be produced by blending, mixing, and melt-kneading the above components.

The mixing is performed by using a mixer such as a tumbler, a V-blender, a ribbon blender, and the melt-kneading is performed by using an apparatus such as a single-screw extruder, a twin-screw extruder, a Banbury mixer, a roll mixer, a Brabender plastograph, a kneader, and the mixture is melt-kneaded and granulated.

### <Method for Producing Fiber-Reinforced Resin Composite Material>

The fiber-reinforced resin composite material of the present invention is not particularly limited in the production method thereof, and is preferably produced by impregnating a mat made of the inorganic fiber material (Y) (hereinafter, sometimes referred to as an "inorganic fiber mat (Y')") with the thermoplastic resin composition (X) or the PP composition. Examples of the impregnation method include a method of applying the thermoplastic resin composition or the PP composition to the inorganic fiber mat (Y'), a method of preparing a sheet of the thermoplastic resin composition or the PP composition (hereinafter, sometimes referred to as "thermoplastic resin sheet" or "PP sheet"), laminating the thermoplastic resin sheet or the PP sheet on the inorganic fiber mat (Y'), and heating and melting the thermoplastic resin sheet or the PP sheet to impregnate the inorganic fiber mat (Y').

In the present invention, a method of laminating the thermoplastic resin sheet or the PP sheet on a mat formed of an inorganic fiber material, and heating and melting the thermoplastic resin sheet or the PP sheet is preferable from the viewpoint of the impregnation property of the fiber-reinforced resin composite material into the fiber. In particular, a laminate can be obtained by laminating the inorganic fiber mat between two thermoplastic resin sheets or PP sheets, then heating and pressurizing the laminate, and then cooling and solidifying the laminate.

Here, the thickness of the thermoplastic resin sheet or the PP sheet is not particularly limited as long as it is within a range in which the inorganic fiber mat can be impregnated well.

### (Inorganic Fiber Mat (Y'))

The form of the inorganic fiber material used in the method for producing a fiber-reinforced resin composite material is not particularly limited, and those having various forms can be used, but those formed into a mat shape or a sheet shape are preferable.

More specifically, a woven fabric formed of glass fibers (hereinafter referred to as a "glass fiber fabric") and a woven fabric formed of metal oxide fibers typified by alumina fibers (hereinafter referred to as a "metal oxide fabric") are preferable.

The basis weight (mass per unit area) of the inorganic fiber mat is not particularly limited and is appropriately determined depending on the application, and is preferably 300 g/m² or more, more preferably more than 800 g/m², and more preferably more than 1500 g/m². In addition, the basis weight of the inorganic fiber mat is not particularly limited, and is preferably 5000 g/m² or less, more preferably 4500 g/m² or less, still more preferably 4000 g/m² or less, and particularly preferably 3500 g/m² or less.

The thickness of the inorganic fiber mat according to the present invention is not particularly limited, and is preferably 4 mm or more, more preferably 5 mm or more, and still more preferably 6 mm or more. On the other hand, the thickness of the inorganic fiber mat is preferably 40 mm or less, more preferably 35 mm or less, and still more preferably 30 mm or less.

In the method of laminating the thermoplastic resin sheet or the PP sheet on the inorganic fiber mat, followed by heating and melting, the heating temperature is preferably 170 to 300°C. When the heating temperature is 170°C or higher, the fluidity of the polypropylene-based resin is sufficient, the inorganic fiber mat can be sufficiently impregnated with the PP composition, and a suitable fiber-reinforced resin composite material can be obtained. On the other hand, when the heating temperature is 300°C or lower, the thermoplastic resin composition or the PP composition is not deteriorated.

Further, the applied pressure is preferably 0.1 to 1 MPa. When the applied pressure is 0.1 MPa or more, the inorganic fiber mat can be sufficiently impregnated with the thermoplastic resin composition or the PP composition, and a suitable fiber-reinforced resin composite material can be obtained. On the other hand, when the applied pressure is 1 MPa or less, the thermoplastic resin composition or the PP composition flows, and burrs are not generated.

In addition, the temperature at the time of cooling is not particularly limited as long as it is equal to or lower than the freezing point of the thermoplastic resin in the thermoplastic resin composition or the PP composition, but when the cooling temperature is 80°C or lower, the obtained fiber-reinforced resin composite material is not deformed when being taken out. From the above viewpoint, the cooling temperature is preferably room temperature to 80°C.

Examples of the method of heating, pressurizing, and cooling the laminate to obtain a fiber-reinforced resin composite material include a method of press-molding the laminate in a mold equipped with a heating device and laminate processing of heating and pressurizing the laminate by passing the laminate between two pairs of rollers equipped with a heating device, and in particular, the laminate processing is preferable because continuous production can be performed and productivity is high.

### <Thickness of Fiber-Reinforced Resin Composite Material>

The thickness of the fiber-reinforced resin composite material of the present invention is usually 1 to 10 mm, and preferably 2 to 5 mm. When the thickness of the fiber-reinforced resin composite material is 1 mm or more, it is easy to produce the fiber-reinforced resin composite material, and on the other hand, when the thickness of the fiber-reinforced resin composite material is 10 mm or less, it is not necessary to preheat for a long time when the fiber-reinforced resin composite material is processed by stamping or the like, and good molding processability can be obtained.

### <Molded Body>

The fiber-reinforced resin composite material of the present invention can be molded into a desired shape by stamping molding according to a conventional method, and a molded body formed of the fiber-reinforced resin composite material can be obtained.

### (Application)

Examples of applications of the fiber-reinforced resin composite material of the present invention include various parts in the industrial field such as automobile parts and electrical and electronic equipment parts. In particular, since the fiber-reinforced resin composite material of the present invention is excellent in strength, rigidity, and conductivity, and is also excellent in processability, and the fiber-reinforced resin composite material can be suitably used for applications requiring these performances in well balanced and higher manner, for example, various housings and casings such as a battery case.

### [Structure]

The structure in the present invention is preferably a battery having a battery housing and a battery cell, and the battery is not particularly limited. Examples of the battery include secondary batteries such as a lithium ion battery, a nickel-hydrogen battery, a lithium-sulfur battery, a nickel-cadmium battery, a nickel-iron battery, a nickel-zinc battery, a sodium-sulfur battery, a lead storage battery, and an air battery. Among these, a lithium ion battery is preferable, and in particular, the battery housing of the present invention is suitably used for suppressing thermal runaway of a lithium ion battery. That is, the battery housing of the present invention is preferably a battery housing of a lithium-ion battery.

### [Electric Mobility]

The electric mobility in the present invention refers to transportation equipment such as a vehicle, a ship, or an airplane that operates using electricity as an energy source. The vehicle includes a hybrid car in addition to an electric vehicle (EV).

The above-described structure such as a battery having a battery housing of the present invention and a battery cell is highly safe and is very useful for electric mobility using a battery module having a high energy density in order to extend a travel distance.

### Examples

Hereinafter, the present invention will be described in detail with reference to Examples, but the present invention is not limited to these Examples.

### 1. Evaluation of Flame Shielding Property

For the fiber-reinforced resin composite material prepared in each of Examples and Comparative Examples, a flame of a burner at 1300°C was applied from one surface, and it was evaluated whether the flame penetrated after 15 minutes. The distance from the nozzle of the burner to the sample was 160 mm, and the temperature of the flame front surface was set to 1200°C. The flame front temperature was confirmed with a thermocouple thermometer.

### 2. Air Shot Test (Strength against Shock Waves)

For the fiber-reinforced resin composite material prepared in each of Examples and Comparative Examples, a flame of a burner at 1200°C was applied from one surface in the same manner as in the evaluation of the flame shielding property, and after 15 minutes, air was blown at a pressure of 0.2 MPa, and the evaluation was performed based on whether a hole penetrated.

The air blowing conditions are as follows.
Discharge pressure: 0.2 MPa
Discharge size: inner diameter φ3.0 mm
Distance from sample to air nozzle: 35 mm
Air blowing position: flame contact portion of burner

### 3. Evaluation of Flammability

The fiber-reinforced resin composite material prepared in each of Examples and Comparative Examples was evaluated for flame retardancy based on the UL94 50W (20 mm) vertical burning test. The evaluation was made based on whether V-1 was achieved.

### 4. Puncture Test

The fiber-reinforced resin composite material prepared in each of Examples was heated at 1200°C for 15 minutes. With respect to the fiber-reinforced composite material after heating, the maximum impact force, the maximum impact force energy, and the displacement at the maximum impact point when a test piece was punched out were measured using a highspeed puncture impact testing machine Hydroshot (HITS-P10) manufactured by SHIMADZU CORPORATION. The striker radius was set to 1/2 inch, the test piece support was set to 50 mm, and the test speed was set to 3 m/sec. The area of the displacement-load curve obtained in this test was evaluated as the maximum impact force energy of the test piece. The measurement was performed in an indoor environment at a temperature of 23 ± 2°C and a humidity of 50 ± 10%.

### 5. Autograph Test

The fiber-reinforced resin composite material prepared in each of Examples was heated at 1200°C for 15 minutes. The penetration strength of the center portion of the fiber-reinforced resin composite material (200 × 200 mm) after heating was measured using AUTOGRAPH "AG-10TA" (manufactured by SHIMADZU CORPORATION) with a φ20 mm (tip R 3 mm) pushing jig under the condition of a test speed of 20 mm/min.

### (Materials Used)

### 1. Polypropylene-Based Resin (Component a)

"NOVATEC PP SA06GA" (melt flow rate: 60 g/10 min) manufactured by Japan Polypropylene Corporation was used.

### 2. Phosphorus-Based Flame Retardant (Component b)

Phosphorus-based flame retardant composition (manufactured by ADEKA Corporation, ADK STAB FP-2500S, containing 50% to 60% by mass of piperazine pyrophosphate, 35% to 45% by mass of melamine pyrophosphate, and 3% to 6% by mass of zinc oxide with respect to the total mass of the phosphorus-based flame retardant composition)

### 3. Dispersant (Component c)

α-Olefin-maleic anhydride copolymer (manufactured by Mitsubishi Chemical Corporation, DIACARNA 30M, weight-average molecular weight: 7,800).

### 4. Glass Fiber Fabric (Component (Y))

### Glass fiber fabric (basis weight 600 g/m²), elongation at maximum load: 1.0%

The elongation at maximum load of the glass fiber fabric was measured by the following method.

A sample piece of the glass fiber fabric of 250 mm × 25 mm was prepared. Both ends of the sample were fixed with chucks using AUTOGRAPH "AG-10TA" (manufactured by SHIMADZU CORPORATION). The test was performed in tensile mode at a speed of 200 mm/min. The displacement amount and the load value were measured, and the sample elongation (strain amount) at the maximum load was calculated.

### 5. Glass Fiber Mat

A glass fiber mat obtained by needle-punching a swirl mat (basis weight of 880 g/m²) produced from a continuous glass fiber (fiber diameter of 23 µm) of roving was used.

### Elongation at maximum load: 10%

The elongation at maximum load of the glass fiber mat was measured by the following method.

A sample piece of the glass fiber fabric of 250 mm × 25 mm was prepared, and the elongation at maximum load was measured using AUTOGRAPH "AG-10TA" (manufactured by SHIMADZU CORPORATION). To be specific, both ends of the sample were fixed with chucks, and the test was performed in tensile mode at a speed of 200 mm/min. The displacement amount and the load value were measured, and the sample elongation (strain amount) at the maximum load was calculated.

### Preparation Example 1 (Preparation of PP Composition)

The component a, the component b, and the component c were mixed at a proportion of 68% by mass, 30% by mass, and 2% by mass, respectively, and melt-kneaded (230°C) to prepare pellets of a polypropylene-based resin composition (PP composition).

### Comparative Preparation Example 1

Pellets of a polypropylene-based resin composition (PP composition) were prepared in the same manner as in Preparation Example 1 except that the component b and the component c were not used.

### Example 1

The pellets of the PP composition granulated in Preparation Example 1 were placed in an extruder, melted, and then extruded into a sheet shape to obtain an extruded sheet-shaped PP sheet 21 (see Fig. 3). The glass fiber fabrics 22 were laminated on both surfaces of the PP sheet 21 so as to sandwich the PP sheet 21, thereby obtaining a laminate. Further, the PP sheets 21 were laminated on both surfaces so as to be the outermost layers so as to sandwich the laminate, thereby obtaining a laminate. Next, the laminate was heated and pressurized at 230°C for 6 minutes while applying a pressure of 0.3 MPa using a laminator, and then cooled and solidified, thereby obtaining a fiber-reinforced resin composite material (thickness: 1.5 mm) 10 (see Fig. 3). The PP sheet 21 was partially impregnated into the glass fiber fabric 22 to obtain a fiber-reinforced resin composite material having an integrated layer. The weight ratio of the PP sheet 21 to the glass fiber fabric 22 was PP sheet:glass fiber fabric = 1:1. The results of evaluation by the above method are shown in Table 1.

### Example 2

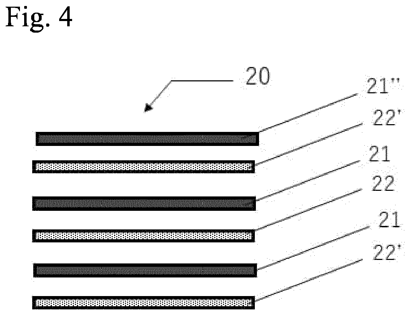

The pellets of the PP composition granulated in Preparation Example 1 were placed in an extruder, melted, and then extruded into a sheet shape to obtain an extruded sheet-shaped PP sheet 21. The PP sheets 21 were laminated on both surfaces of the glass fiber fabric 22 so as to sandwich the glass fiber fabric 22, thereby forming a laminate. Further, glass fiber fabrics 22' were laminated on both surfaces of the laminate so as to sandwich the laminate. Finally, PP sheet 21" was laminated on the surface of the glass fiber fabric 22' on one side so as to be the outermost layer. Next, the laminate was heated and pressurized at 230°C for 6 minutes while applying a pressure of 0.3 MPa using a laminator, and then cooled and solidified, thereby obtaining a fiber-reinforced resin composite material (thickness: 1.5 mm) 10 (see Fig. 4). The PP sheet was partially impregnated into the glass mat fabric fibers to obtain a fiber-reinforced resin composite material having an integrated layer. The weight ratio of the PP sheet to the glass fiber fabric was PP sheet:glass fiber fabric = 1:2. When the cross-section of the sample obtained by cutting the fiber-reinforced resin composite material and polishing the cross-section was observed with a microscope "KH-8700" (bright field, magnification: 50 times, 140 times) manufactured by HIROX CO., LTD., a layer (A) in which the ratio of the weight of the thermoplastic resin composition (X) to the weight of the inorganic fiber material (Y) per unit area was relatively large and a layer (B) in which the ratio of the weight of the thermoplastic resin composition (X) to the weight of the inorganic fiber material (Y) per unit area was relatively small were observed. In the microscopic image of the sample cross section, the cross section of the glass fibers is clearly observed as a white or gray circular or elliptical shape. Therefore, the layer (A) and the layer (B) can be distinguished from each other by measuring the number of glass fibers observed in the cross section. The thickness ratio of the layer (A) to the layer (B) was 17/83. The results of evaluation by the above method are shown in Table 1.

### Comparative Example 1

A fiber-reinforced resin composite material was obtained in the same manner as in Example 1 except that PP (Comparative Preparation Example 1) obtained by melting (230°C) and granulating only the component a was used instead of the pellets of the PP composition granulated in Preparation Example 1. The results of evaluation by the above method are shown in Table 1.

### Comparative Example 2

A fiber-reinforced resin composite material was obtained in the same manner as in Comparative Example 1, except that the weight ratio of the glass fiber to the resin was changed as shown in Table 1. The results of evaluation by the above method are shown in Table 1.

### Comparative Example 3

The pellets of the PP composition granulated in Preparation Example 1 were placed in an extruder, melted, and then extruded into a sheet shape to obtain an extruded sheet-shaped PP sheet 21. Glass fiber mats were laminated on both surfaces of the PP sheet 21 so as to sandwich the PP sheet 21, thereby obtaining a laminate. Further, the PP sheets 21 were laminated on both surfaces so as to be the outermost layers so as to sandwich the laminate, thereby obtaining a laminate. Next, the laminate was heated and pressurized at 230°C for 4 minutes while applying a pressure of 0.3 MPa using a laminator, and then cooled and solidified, thereby obtaining a fiber-reinforced resin composite material (thickness: 1.5 mm). The PP sheet 21 was partially impregnated into the glass fiber mat to obtain a fiber-reinforced resin composite material having an integrated layer. The weight ratio of the PP sheet 21 to the glass fiber mat was PP sheet:glass fiber mat = 65:35. The results of evaluation by the above method are shown in Table 1.

**Table 1**

| | Glass fiber weight (wt%) | Resin weight (wt%) | Flame retardant weight (wt%) in resin | Flame shielding property (presence or absence of penetration) |
|---|---|---|---|---|
| Example 1 | 50 | 50 | 30 | Not penetrating |
| Example 2 | 67 | 33 | 30 | Not penetrating |
| Comparative Example 1 | 50 | 50 | 0 | Not performed |
| Comparative Example 2 | 70 | 30 | 0 | Penetration |
| Comparative Example 3 | 35 | 65 | 30 | Not penetrating |

**Table 1 (continued)**

| | Air shot test | UL94 test | Puncture test Maximum impact force point Energy (J) | Autograph Penetration load (N) |
|---|---|---|---|---|
| Example 1 | Not penetrating | Equivalent to V-1 | - | - |
| Example 2 | Not performed | Not performed | 0.90 | 47 |
| Comparative Example 1 | Not performed | Not satisfying V-1 | - | - |
| Comparative Example 2 | Cannot be evaluated | Not performed | - | - |
| Comparative Example 3 | Not performed | Not satisfying V-1 | 0.16 | 3 |

As shown in Example 1, the fiber-reinforced resin composite material of the present invention was excellent in flame shielding property, and the flame was shielded even after 15 minutes, and the flame did not spread to the back surface. Similarly, in the air shot test, penetration did not occur, and it was demonstrated that the strength of the fiber-reinforced resin composite material of the present invention was high.

On the other hand, it can be seen that the sheet of Comparative Example 1 does not satisfy V-1 in the UL94 test and is inferior in flammability. In the sheet of Comparative Example 2, the flame penetrated to the back surface in 67 seconds. Since penetration occurred in the flame shielding test, the air shot test could not be evaluated.

Further, from the comparison between Example 2 and Comparative Example 3, it can be seen that the fiber-reinforced resin composite material of the present invention shows good results in the puncture test and the autograph test, and thus both the impact strength and the penetration strength after heating are high.

### Industrial Applicability

It was confirmed that the fiber-reinforced resin composite material of the present invention exhibited high flame shielding property, high flame resistance, and high strength against shock waves. Therefore, it is useful as a material for various industrial parts required to have high safety, such as aircraft, ships, automobile parts, electric and electronic equipment parts, and building materials. In particular, it can be suitably used for various housings and casings of batteries in which metals have been conventionally used, and it is expected to contribute to safety of automobiles, improve energy efficiency by weight reduction, reduce CO₂ emissions, and the like.

### Reference Signs List

- 10:: Fiber-reinforced resin composite material
- 11:: Layer (A)
- 12:: Layer (B)
- 20:: Laminate
- 21:: PP sheet (sheet made of thermoplastic resin composition (X))
- 21':: PP sheet
- 21":: PP sheet
- 22:: Glass fiber fabric mat (sheet made of inorganic fiber material (Y))
- 22':: Glass fiber fabric mat

## Claims

1. A fiber-reinforced resin composite material comprising a thermoplastic resin composition (X) and an inorganic fiber material (Y), wherein the thermoplastic resin composition (X) comprises a thermoplastic resin and a phosphorus-based flame retardant, the phosphorus-based flame retardant comprises an intumescent flame retardant, and the inorganic fiber material (Y) has an elongation at maximum load of 5% or less.

2. The fiber-reinforced resin composite material according to claim 1, comprising at least one layer (A) in which a ratio of the weight of the thermoplastic resin composition (X) to the weight of the inorganic fiber material (Y) per unit area is relatively large and at least one layer (B) in which a ratio of the weight of the thermoplastic resin composition (X) to the weight of the inorganic fiber material (Y) per unit area is relatively small.

3. The fiber-reinforced resin composite material according to claim 1, wherein a total weight ratio of the thermoplastic resin composition (X) and the inorganic fiber material (Y) is 70/30 to 30/70.

4. The fiber-reinforced resin composite material according to claim 1, wherein a total weight ratio of the thermoplastic resin composition (X) and the inorganic fiber material (Y) is 60/40 to 30/70.

5. The fiber-reinforced resin composite material according to claim 2, wherein a thickness ratio between the layer (A) and the layer (B) is 1/99 to 50/50.

6. The fiber-reinforced resin composite material according to claim 1, wherein the thermoplastic resin composition (X) further comprises a dispersant.

7. The fiber-reinforced resin composite material according to claim 6, wherein the dispersant comprises a copolymer of an α-olefin and an unsaturated carboxylic acid.

8. The fiber-reinforced resin composite material according to claim 6, wherein a content of the dispersant with respect to 100 parts by mass of the phosphorus-based flame retardant is more than 0 and 25 parts by mass or less.

9. The fiber-reinforced resin composite material according to claim 1, wherein the inorganic fibers constituting the inorganic fiber material (Y) comprise at least one selected from glass fibers, ceramic fibers, metal fibers, and metal oxide fibers.

10. The fiber-reinforced resin composite material according to claim 1, wherein the inorganic fiber material (Y) comprises an inorganic fiber woven fabric.

11. The fiber-reinforced resin composite material according to claim 1, wherein the thermoplastic resin constituting the thermoplastic resin composition (X) comprises a polypropylene-based resin, and a content of the polypropylene-based resin is 15% to 80% by mass with respect to a total weight.

12. The fiber-reinforced resin composite material according to claim 1, wherein a content of the phosphorus-based flame retardant is 1% to 30% by mass with respect to the total weight.

13. A molded body obtained by stamping molding the fiber-reinforced resin composite material according to any one of claims 1 to 12.

14. A housing or casing using the fiber-reinforced resin composite material according to any one of claims 1 to 12.

15. A battery housing using the fiber-reinforced resin composite material according to any one of claims 1 to 12.
